# EUROPÄISCHE PATENTSCHRIFT

(11) **EP 1 903 236 B1**
(45) Veröffentlichungstag und Bekanntmachung des Hinweises auf die Patenterteilung: **13.04.2011**
(21) Anmeldenummer: 07017054.3
(22) Anmeldetag: 31.08.2007
(51) Int. Cl.: F16D 25/08

(54) **Zentralausrücker für eine hydraulische Kupplungsbetätigung**
Central release unit for hydraulic clutch actuation
Débrayage central pour un embrayage hydraulique

(30) Priorität: 22.09.2006 DE 202006014754 U
(43) Veröffentlichungstag der Anmeldung: 26.03.2008
(73) Patentinhaber: FTE automotive GmbH, 96106 Ebern (DE)
(72) Erfinder: Burkard, Johannes, 97486 Königsberg (DE); Gnyp, Jan, 96106 Ebern (DE)
(74) Vertreter: Oppermann, Mark

(56) Entgegenhaltungen:
- DE-A1- 19 635 101
- DE-A1- 19 813 641

## Beschreibung

### TECHNISCHES GEBIET

Die Erfindung bezieht sich auf einen Zentralausrücker für eine hydraulische Kupplungsbetätigung entsprechend dem Oberbegriff des Patentanspruchs 1.

### STAND DER TECHNIK

Der Spaltraum zwischen dem Zylindergehäuse und dem Ringflansch bezweckt einerseits, daß der Ringkolben mit seiner Dichtmanschette nicht eine für die Druckmittelzufuhr in der zylindrischen Wandungsfläche sonst vorzusehende Querbohrung überschleifen muß, was der Dichtwirkung der Dichtmanschette abträglich wäre, und andererseits, daß die zylindrische Wandungsfläche etwa bis zum Ringflansch für den Bewegungsweg des Ringkolbens nutzbar ist, was für eine möglichst geringe axiale Baulänge des Zentralausrückers von Nutzen ist. Allerdings entstehen durch den Spaltraum unvermeidbar hydraulische Wirkflächen am Zylindergehäuse und am Ringflansch, wodurch bei einer Druckbeaufschlagung des Druckraums im Spaltraum hydraulische Axialkräfte auftreten, die bestrebt sind, das Zylindergehäuse und den Ringflansch und damit die Führungshülse axial auseinanderzudrücken. Im Ergebnis muß diesen Axialkräften durch konstruktive Mittel, wie durch eine entsprechende Dimensionierung der beteiligten Bauteile Rechnung getragen werden.

Bei einer bekannten hydraulisch betätigbaren Ausrückvorrichtung (DE-A-198 13 641) besitzt der Ringflansch an seinem Außenumfang einen angeformten rohrabschnittförmigen Kragen, welcher nach der Montage der Führungshülse am Zylindergehäuse einen Zylindervorsprung des Zylindergehäuses umschließt. Dabei befindet sich am Zylindervorsprung eine Umfangsnut, in welche ein Dichtungsring eingesetzt ist, welcher der Innenumfangsfläche des Kragens dicht anliegt. Hierbei bilden die vollständige Stirnfläche des Zylindergehäuses, soweit diese dem Ringflansch gegenüberliegt, und die Innenfläche des Ringflansches hydraulische Wirkflächen beträchtlicher Größe, die sowohl am Zylindervorsprung des Zylindergehäuses als auch an der Innenumfangsfläche des Kragens bis zum Dichtungsring reichen. Dementsprechend entstehen im Spaltraum erhebliche hydraulische Axialkräfte, die eine entsprechende konstruktive Auslegung der Bauteile erforderlich machen.

Die DE 19 635 101 offenbart einen Zentralausrücker gemäß dem Oberbegriff des Anspruchs 1.

### AUFGABENSTELLUNG

Der Erfindung liegt die Aufgabe zugrunde, einen Zentralausrücker der im Oberbegriff des Patentanspruchs 1 angegebenen Bauweise so auszubilden, daß die hydraulischen Wirkflächen und damit die auftretenden Axialkräfte im Spaltraum vergleichsweise klein sind.

### DARSTELLUNG DER ERFINDUNG

Diese Aufgabe wird erfindungsgemäß durch die im Patentanspruch 1 angegebenen Merkmale gelöst. Weitere vorteilhafte oder zweckmäßige Ausbildungen gehen aus den Patentansprüchen 2 und 3 hervor und sind nachfolgend ebenfalls näher beschrieben.

Erfindungsgemäß ist bei einem Zentralausrücker für eine hydraulische Kupplungsbetätigung, der ein eine zylindrische Wandungsfläche aufweisendes Zylindergehäuse und eine konzentrisch zur zylindrischen Wandungsfläche angeordnete Führungshülse aufweist, auf der ein mit der Kupplung wirkverbindbarer Ringkolben verschiebbar geführt ist, der wahlweise über einen von der zylindrischen Wandungsfläche und der Führungshülse begrenzten Druckraum mit einem Druckmittel beaufschlagbar ist, um die Kupplung auszurücken, wobei die Führungshülse einen Ringflansch aufweist, über den die Führungshülse so an einer Stirnfläche des Zylindergehäuses befestigt ist, daß radial außerhalb der zylindrischen Wandungsfläche und an dieser beginnend zwischen der zylindrischen Wandungsfläche und dem Ringflansch ein Spaltraum gebildet ist, in dem eine Druckanschlußbohrung für den Druckraum einmündet und der nach radial außen mittels einer zwischen dem Zylindergehäuse und dem Ringflansch angeordneten Dichtung abgedichtet ist; in der Stirnfläche des Zylindergehäuses eine zur Aufnahme eines Dichtrings bestimmte kreisförmige Ringnut bezüglich der zylindrischen Wandungsfläche des Zylindergehäuses exzentrisch versetzt angeordnet, wobei die Ringnut radial außerhalb aber nahe der Öffnung der Druckanschlußbohrung verläuft, während sie auf der diametral gegenüberliegenden Seite nahe der zylindrischen Wandungsfläche verläuft.

Auf diese Weise entsteht ein etwa sichelförmiger Spaltraum mit entsprechend sichelförmigen hydraulischen Wirkflächen sowohl am Zylindergehäuse als auch axial gegenüberliegend an dem Ringflansch, mit der größten radialen Breite an der Öffnung der Druckanschlußbohrung. Dadurch sind die Größe der axialen hydraulischen Wirkflächen, an denen das Druckmittel angreift, wesentlich verringert. Demgemäß treten bei Druckbeaufschlagung des Druckraums im Spaltraum geringere Kräfte auf, die bestrebt sind, das Zylindergehäuse und die Führungshülse axial auseinanderzudrücken. Im Ergebnis sind konstruktiv nur geringe Axialkräfte aufzunehmen, was eine entsprechend schwächere Dimensionierung der beteiligten Bauteile gestattet.

Wenn die Öffnung der Druckanschlußbohrung schlitzförmig ausgebildet ist, mit einer größeren Länge in Umfangsrichtung der Ringnut und einer kleineren radialen Breite, kann der innere Durchmesser der Ringnut verkleinert werden, wodurch die hydraulischen Wirkflächen am Zylindergehäuse und am Ringflansch vorteilhaft entsprechend verkleinert werden.

In einer zweckmäßigen Ausgestaltung weist die Ringnut einen rechteckigen Querschnitt auf, der den in die Ringnut bei der Montage der Anordnung einzulegenden Dichtring gegen Herausfallen sichert.

### KURZE BESCHREIBUNG DER ZEICHNUNGEN

Nachfolgend wird die Erfindung anhand eines bevorzugten Ausführungsbeispiels unter Bezugnahme auf die beigefügten, teilweise schematischen und in unterschiedlichen Zeichnungsmaßstäben ausgeführten Zeichnungen näher beschrieben. Darin zeigt:
- Fig. 1: eine Längsschnittansicht des Zentralausrückers mit in die Zeichnungsebene eingeschwenktem Hydraulikanschluß,
- Fig. 2: die Stirnansicht des Zylindergehäuses ohne Führungshülse und
- Fig. 3: ein vergrößertes Schnittdetail entsprechend dem Ausschnittskreis III in Fig. 2.

### DETAILLIERTE BESCHREIBUNG DES AUSFÜHRUNGSBEISPIELS

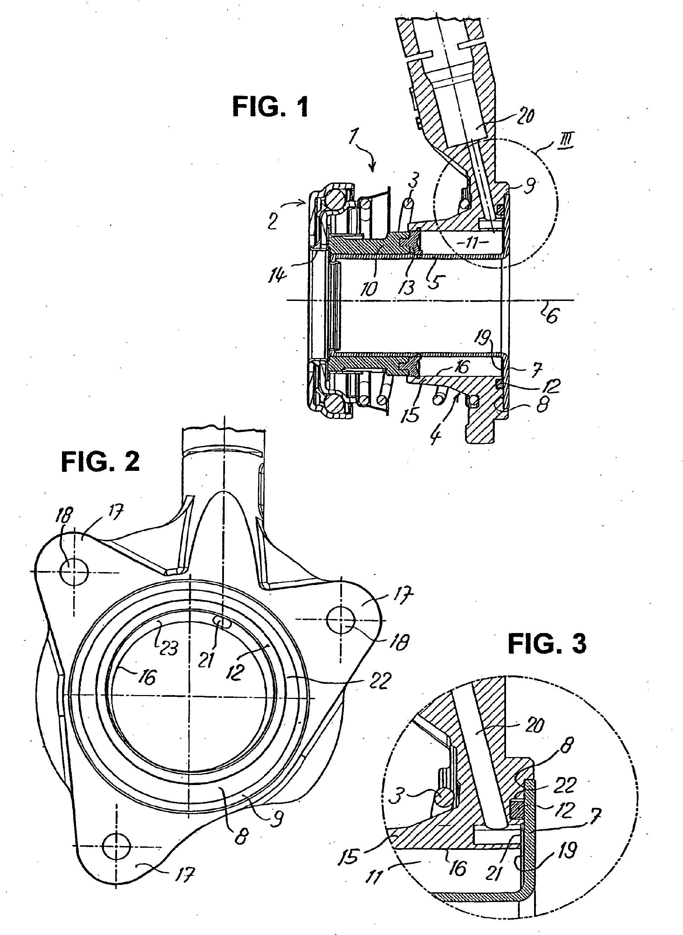

Fig. 1 zeigt einen Zentralausrücker 1 als Betätigungsorgan einer hydraulischen Kupplungsbetätigung für Trockenreibkupplungen im nicht montierten Zustand in Grundstellung. Am in Fig. 1 linken Ende des Zentralausrückers ist ein an sich bekanntes Ausrücklager 2 als Betätigungskraft-Übertragungsglied angeordnet, über das der Zentralausrücker mit der Trockenreibkupplung (nicht dargestellt) zur Übertragung einer Betätigungskraft in an sich bekannter Weise wirkverbunden ist. Das als Kugellager ausgebildete Ausrücklager 2 ist mittels einer Vorlastfeder 3 die im Ausführungsbeispiel eine Schraubendruckfeder ist, in Ausrückrichtung, d.h. in Fig. 1 nach links, definiert vorgespannt.

Der Zentralausrücker 1 weist im Ausführungsbeispiel ein aus einem geeigneten thermoplastischen Kunststoff spritzgeformtes Zylindergehäuse 4 auf, welches eine vorzugsweise aus einem Stahlblech gezogene im wesentlichen zylindrische Führungshülse 5 mit einem im wesentlichen über ihre Länge durchgehend gleichbleibenden Durchmesser konzentrisch umgibt. Die Führungshülse 5 besitzt an ihrem in Fig. 1 rechten Ende einen rechtwinklig zur Hülsenachse 6 abgewinkelten kreisringförmigen Ringflansch 7, über den die Führungshülse 5 zentriert an einer Stirnfläche 8 des Zylindergehäuses 4 angebracht ist. Die Stirnfläche 8 ist von einer sie kreisförmig begrenzenden Ringrippe 9 umgeben, durch welche die Zentrierung des Ringflansches 7 und damit der Führungshülse 5 am Zylindergehäuse 4 erfolgt. Der Ringflansch 7 ist am Zylindergehäuse 4 auf geeignete Weise befestigt und/oder wird zwischen dem Zylindergehäuse 4 und dem Getriebegehäuse (nicht dargestellt) bei der Montage des Zentralausrückers 1 fest eingespannt.

Auf der Führungshülse 5 ist ein im Ausführungsbeispiel aus einem geeigneten thermoplastischen Kunststoff spritzgeformter Ringkolben 10 axial gleitbeweglich geführt, der zusammen mit dem Zylindergehäuse 4 der Führungshülse 5 und deren Ringflansch 7 einen Druckraum 11 variabel begrenzt. Der Druckraum 11 ist gegenüber der Umgebung mittels einer zwischen dem Zylindergehäuse und dem Ringflansch 7 vorgesehenen statischen Dichtung in der Form eines Dichtrings 12, dessen besondere Anordnung noch beschrieben wird, abgedichtet. Auf der Seite des Ringkolbens 10 ist eine dynamische Abdichtung des Druckraums 11 in der Form einer Dichtmanschette 13 aus einem elastomeren Material abgedichtet, die an dem in Fig. 1 rechten Ende des Ringkolbens 10 angebracht ist.

An dem in Fig. 1 linken Ende des Ringkolbens 10 ist dieser über einen Blechring 14 mit dem Ausrücklager 2 fest verbunden, so daß das Ausrücklager 2 und der Ringkolben 10 eine zusammenhängende funktionale Einheit bilden, die über den Ringkolben 10 axial verschiebbar an der Führungshülse 5 geführt ist.

Das Zylindergehäuse 4 des Zentralausrückers 1 besitzt einen im wesentlichen hohlzylindrischen Wandungsabschnitt 15, der eine zentrale Durchgangsbohrung mit konstantem Durchmesser aufweist, die eine zylindrische Wandungsfläche 16 bildet, welche konzentrisch zur Führungshülse 5 verläuft und welcher die Dichtmanschette 13 des Ringkolbens 10 in allen axialen Relativstellungen zwischen dem Zylindergehäuse 4 und dem Ringkolben 10 dicht anliegt. An seinem in Fig. 1 rechten Ende geht der Wandungsabschnitt 15 des Zylindergehäuses 4 in drei Flanschabschnitte 17 über, wie aus Fig. 2 ersichtlich ist. Jeder der Flanschabschnitte 17 ist mit einem Befestigungsauge 18 versehen, die im Kraftfahrzeug der Befestigung des Zentralausrückers 1 am Getriebegehäuse bzw. einem Getriebedeckel (nicht dargestellt) mit beispielsweise Schrauben (nicht dargestellt) dienen, welche die Befestigungsaugen 18 durchgreifen. Im montierten Zustand des Zentralausrückers 1 erstreckt sich die Kupplungs- bzw. Getriebewelle (nicht dargestellt) durch die Führungshülse 5 hindurch.

Die zylindrische Wandungsfläche 16 endet vor dem Ringflansch 7 der Führungshülse 5, wie am besten aus Fig. 3 deutlich wird, so daß radial außerhalb der zylindrischen Wandungsfläche 16 und an dieser beginnend zwischen der Wandungsfläche 16 und dem Ringflansch 7 ein Spaltraum 19 gebildet ist, welcher dem Druckmitteldurchgang dient. Mit anderen Worten ausgedrückt, der Spaltraum 19 wird durch eine axiale Vertiefung der Stirnfläche 8 innerhalb des vom Dichtring 12 umschlossenen Bereichs gebildet. In diesen Spaltraum 19 mündet eine Druckanschlußbohrung 20 mit ihrer Öffnung 21 ein. Die Abdichtung des Spaltraums 19 nach außen übernimmt der Dichtring 12. Der Dichtring 12 ist in eine kreisförmige Ringnut 22 eingelegt, die im Ausführungsbeispiel einen rechteckigen Querschnitt aufweist und bei der Spritzformung des Zylindergehäuses eingeformt werden kann. Auch der Dichtring 12 besitzt im Ausführungsbeispiel einen rechteckigen Querschnitt und steht im ungepreßten Zustand über die Stirnfläche 8 vor.

Wie aus den Fig. 2 und 1 hervorgeht, ist die Ringnut 22 bezüglich der zylindrischen Wandungsfläche 16 exzentrisch versetzt angeordnet, so daß der Spaltraum 19, von dem in Fig. 2 nur die am Zylindergehäuse 4 befindliche hydraulische Wirkfläche 23 ersichtlich ist, eine Sichelform aufweist. Die Ringnut 22 verläuft radial außerhalb aber nahe der Öffnung 21 der Durchgangsbohrung 20, während sie auf der diametral gegenüberliegenden Seite nahe der zylindrischen Wandungsfläche 16 verläuft. Wie aus Fig. 2 hervorgeht, ist die Öffnung 21 schlitzförmig ausgebildet, wobei ihre größere Länge in Umfangsrichtung der Ringnut 22 vorgesehen ist, während sie in radialer Richtung eine vergleichsweise geringe Breite besitzt. Auf diese Weise erhält die hydraulische Wirkfläche bei der gegebenen exzentrischen Anordnung der Ringnut 22 und des Dichtrings 12 ihre geringste Flächengröße.

Bei dem bisher beschriebenen Ausführungsbeispiel ist das Zylindergehäuse 4, wie schon erwähnt wurde, aus einem thermoplastischen Kunststoff spritzgeformt. Es kommen aber auch metallische Werkstoffe für das Zylindergehäuse in Betracht, beispielsweise Aluminiumlegierungen. Hierbei wird die kreisrunde Ringnut 22 spangebend gefertigt, wobei im Programmablauf durch einen einfachen programmierbaren Versatz des Werkstücks zum Werkzeugträger auf der Fertigungseinheit die Ringnut herstellbar ist. Auch eine vorgegossene kreisrunde Ringnut kann auf die gleiche Weise spangebend bearbeitet werden.

Es wird ein Zentralausrücker für eine hydraulische Kupplungsbetätigung offenbart, umfassend ein Zylindergehäuse mit einer Wandungsfläche und eine dazu konzentrische Führungshülse für einen Ringkolben, der zum Ausrücken der Kupplung wahlweise über einen Druckraum zwischen Wandungsfläche und Führungshülse druckmittelbeaufschlagbar ist. Hierbei hat letztere einen Ringflansch zur Befestigung an einer Zylindergehäuse-Stirnfläche, so daß radial außerhalb der Wandungsfläche zwischen Wandungsfläche und Ringflansch ein Spaltraum gebildet ist, in dem eine Druckanschlußbohrung einmündet und der nach radial außen mittels einer zwischen Zylindergehäuse und Ringflansch angeordneten Dichtung abgedichtet ist. Erfindungsgemäß ist in der Zylindergehäuse-Stirnfläche eine zur Dichtring-Aufnahme bestimmte kreisförmige Ringnut bezüglich der Wandungsfläche exzentrisch versetzt angeordnet, wobei die Ringnut radial außerhalb aber nahe der Öffnung der Druckanschlußbohrung verläuft, während sie auf der diametral gegenüberliegenden Seite nahe der Wandungsfläche verläuft, so daß die hydraulischen Wirkflächen und damit die auftretenden Axialkräfte im Spaltraum minimiert sind.

### BEZUGSZAHLENLISTE

- 1: Zentralausrücker
- 2: Ausrücklager
- 3: Vorlastfeder
- 4: Zylindergehäuse
- 5: Führungshülse
- 6: Hülsenachse
- 7: Ringflansch
- 8: Stirnfläche
- 9: Ringrippe
- 10: Ringkolben
- 11: Druckraum
- 12: Dichtring
- 13: Dichtmanschette
- 14: Blechring
- 15: Wandungsabschnitt
- 16: Wandungsfläche
- 17: Flanschabschnitte
- 18: Befestigungsaugen
- 19: Spaltraum
- 20: Druckanschlußbohrung
- 21: Öffnung
- 22: Ringnut
- 23: hydraulische Wirkfläche

## Patentansprüche

1. Zentralausrücker (1) für eine hydraulische Kupplungsbetätigung, mit einem eine zylindrische Wandungsfläche (16) aufweisenden Zylindergehäuse (4) und einer konzentrisch zur zylindrischen Wandungsfläche (16) angeordneten Führungshülse (5), auf der ein mit der Kupplung wirkverbindbarer Ringkolben (10) verschiebbar geführt ist, der wahlweise über einen von der zylindrischen Wandungsfläche (16) und der Führungshülse (5) begrenzten Druckraum (11) mit einem Druckmittel beaufschlagbar ist, um die Kupplung auszurücken, wobei die Führungshülse (5) einen Ringflansch (7) aufweist, über den die Führungshülse (5) so an einer Stirnfläche (8) des Zylindergehäuses (4) befestigt ist, daß radial außerhalb der zylindrischen Wandungsfläche (16) und an dieser beginnend zwischen der zylindrischen Wandungsfläche (16) und dem Ringflansch (7) ein Spaltraum (19) gebildet ist, in dem eine Druckanschlußbohrung (20) für den Druckraum (11) einmündet und der nach radial außen mittels einer zwischen dem Zylindergehäuse (4) und dem Ringflansch (7) angeordneten Dichtung (12) abgedichtet ist, **dadurch gekennzeichnet, daß** in der Stirnfläche (8) des Zylindergehäuses (4) eine zur Aufnahme eines Dichtrings (12) bestimmte kreisförmige Ringnut (22) bezüglich der zylindrischen Wandungsfläche (16) des Zylindergehäuses (4) exzentrisch versetzt angeordnet ist, wobei die Ringnut (22) radial außerhalb aber nahe der Öffnung (21) der Druckanschlußbohrung (20) verläuft, während sie auf der diametral gegenüberliegenden Seite nahe der zylindrischen Wandungsfläche (16) verläuft.

2. Zentralausrücker nach Anspruch 1, **dadurch gekennzeichnet,**
**daß** die Öffnung (21) der Druckanschlußbohrung (20) schlitzförmig ausgebildet ist, mit einer größeren Länge in Umfangsrichtung der Ringnut (22) und einer kleineren radialen Breite.

3. Zentralausrücker nach Anspruch 1 oder 2, **dadurch gekennzeichnet, daß** die Ringnut (22) einen rechteckigen Querschnitt aufweist.

## Claims

1. Central release mechanism (1) for hydraulic clutch actuation, comprising a cylinder housing (4), which has a cylindrical wall surface (16), and a guide sleeve (5), which is arranged concentrically with respect to the cylindrical wall surface (16) and on which an annular piston (10) operatively connectible with the clutch is guided to be displaceable, the piston being selectably loadable with a pressure medium by way of a pressure chamber (11), which is bounded by the cylindrical wall surface (16) and the guide sleeve (5), in order to disengage the clutch, wherein the guide sleeve (5) has an annular flange (7) by way of which the guide sleeve (5) is so attached to an end surface (8) of the cylinder housing (4) that formed radially outside the cylindrical wall surface (16) and beginning at this between the cylindrical wall surface (16) and the annular flange (7) is a gap space (19) into which a pressure connecting bore (20) for the pressure chamber (11) opens and which is sealed off radially outwardly by means of a seal (12) arranged between the cylinder housing (4) and the annular flange (7), **characterized in that** a circularly annular groove (22) intended for reception of a sealing ring (12) is arranged in the end surface (8) of the cylinder housing (4) to be offset eccentrically with respect to the cylindrical wall surface (16) of the cylinder housing (4), wherein the annular groove (22) runs radially outside, but near the opening (21) of the pressure connecting bore (20), whilst on the diametrically opposite side it runs near the cylindrical wall surface (16).

2. Central release mechanism according to claim 1, **characterized in that** the opening (21) of the pressure connecting bore (20) is of slot-shaped construction with a greater length in circumferential direction of the annular groove (22) and a smaller radial width.

3. Central release mechanism according to claim 1 or 2, **characterized in that** the annular groove (22) has a rectangular cross-section.

## Revendications

1. Dispositif de débrayage central (1) pour un système d'actionnement hydraulique d'embrayage, comprenant un carter de cylindre (4) présentant une surface de paroi cylindrique (16), et une douille de guidage (5) agencée de manière concentrique à la surface de paroi cylindrique (16), douille de guidage sur laquelle est guidé de manière coulissante un piston annulaire (10) pouvant interagir avec l'embrayage et susceptible d'être alimenté sélectivement avec un fluide de pression par l'intermédiaire d'une chambre de pression (11) délimitée par la surface de paroi cylindrique (16) et la douille de guidage (5), pour produire le débrayage de l'embrayage, la douille de guidage (5) présentant un flasque annulaire (7) par l'intermédiaire duquel la douille de guidage (5) est fixée à une surface frontale (8) du carter de cylindre (4) de façon à ce que soit formée, radialement à l'extérieur de la surface de paroi cylindrique (16) et en débutant au niveau de celle-ci, entre la surface de paroi cylindrique (16) et le flasque annulaire (7), une chambre interstitielle (19) dans laquelle débouche un alésage de raccordement de pression (20) pour la chambre de pression (11), et rendue étanche radialement vers l'extérieur au moyen d'un joint d'étanchéité (12) agencé entre le carter de cylindre (4) et le flasque annulaire (7),
**caractérisé en ce qu'**une rainure annulaire (22) de forme circulaire, destinée à recevoir une bague d'étanchéité (12), est agencée dans la surface frontale (8) du carter de cylindre (4) en étant décalée de manière excentrée par rapport à la surface de paroi cylindrique (16) du carter de cylindre (4), la rainure annulaire (22) s'étendant radialement à l'extérieur, mais à proximité de l'orifice (21) de l'alésage de raccordement de pression (20), tandis que sur le côté diamétralement opposé elle s'étend à proximité de la surface de paroi cylindrique (16).

2. Dispositif de débrayage central selon la revendication 1, **caractérisé en ce que** l'orifice (21) de l'alésage de raccordement de pression (20) est d'une configuration en forme de fente présentant une longueur plus grande dans la direction périphérique de la rainure annulaire (22) et une largeur radiale plus faible.

3. Dispositif de débrayage central selon la revendication 1 ou la revendication 2, **caractérisé en ce que** la rainure annulaire (22) présente une section transversale de forme rectangulaire.
